# EUROPEAN PATENT SPECIFICATION

(11) **EP 3 910 698 B1**
(45) Date of publication and mention of the grant of the patent: **06.03.2024**
(21) Application number: 20799597.8
(22) Date of filing: 03.04.2020
(51) Int. Cl.: H01M 50/204, H01M 50/296, H01M 50/588, H01M 50/691

(54) **BATTERY MODULE**
BATTERIEMODUL
MODULE DE BATTERIE

(30) Priority: 02.04.2020 CN 202010255522
(43) Date of publication of application: 17.11.2021
(73) Proprietor: Sunwoda Mobility Energy Technology Co., Ltd., Shenzhen, Guangdong 518000 (CN)
(72) Inventor: XI, Bingrong, Shenzhen Guangdong 518000 (CN); ZHENG, Weiwei, Shenzhen Guangdong 518000 (CN); WANG, Tianfu, Shenzhen Guangdong 518000 (CN); HUA, Huangwei, Shenzhen Guangdong 518000 (CN)
(74) Representative: Ostriga Sonnet Wirths & Vorwerk
(86) International application number: PCT/CN2020/083312
(87) International publication number: WO 2021/196210

(56) References cited:
- CN-A- 103 733 383
- CN-A- 106 953 038
- CN-A- 109 690 817
- CN-U- 208 955 030
- CN-U- 211 828 911
- JP-A- 2001 298 278
- US-A1- 2014 154 531
- US-A1- 2018 076 438

## Description

### FIELD

The present invention relates to the field of power battery technologies, and more particularly, to a battery module.

### BACKGROUND

Poles of a battery module are located at two ends of the battery module, which are usually fixed on an end plate of the battery module, and are mainly used as media for electrically connecting the battery module to the outside. A nut is arranged in the pole as a connecting medium to be connected to a bus bar, and the nut and the bus bar may emit heat when being electrified. When the battery module is in a low temperature environment, moisture in air may be condensed into a water drop on the nut and the bus bar. With increasing staying time in the low temperature environment, the water drop may be condensed larger and larger, and is likely to flow into the battery module, resulting in dangerous phenomena such as electric leakage, short circuit, fire and explosion, and the like of the battery module.

US2014154531A1 discloses an extraction conductor, which is formed so as to have a straight conductor portion connection a negative electrode terminal to a main circuit terminal and a water escape portion provided so as to be downwardly-extended from an arbitrary position on the straight conductor portion. A cutout is formed in the water escape portion, and the extraction conductor is formed in a U-shape in conformance with the cutout. A liquid intruded into the case after running along the extraction conductor falls on the downwardly-extending water escape portion by gravitation. Since a bottom of the cutout is situated at a position lower than the lower end of the main circuit terminal, the liquid will not rise from the water escape portion toward the main circuit terminal against gravity.

US2018076438A1 discloses a trough of a bus bar which is overmolded with a polymer portion and which forms a drainage channel. The drainage channel is generally disposed adjacent to a base of the bus bar, near a post portion of a terminal block assembly. The drainage channel directs fluid that contact the exterior of the housing near the terminal post and prevents collection of moisture near the terminal.

### SUMMARY

Aiming at the defects in the existing technologies, the present invention proposes a battery module, and is intended to solve a problem of dangerous phenomena such as electric leakage, short circuit, fire and explosion, and the like of the battery module caused by water drops condensed on a nut of a pole and the bus bar which may flow into the battery module.

The present invention proposes the technical solutions as follows.

There is provided a battery module, including a cell, a cover plate, an end plate, a pole terminal, a bus bar, a connecting member and a drainage structure. The cell is arranged on an inner wall of the cover plate, the end plate is arranged on an external wall of the cover plate, the pole terminal is arranged on the end plate. The pole terminal is provided with a first connecting hole, the bus bar is provided with a second connecting hole. The drainage structure is provided with a water storage tank, a bottom wall of the water storage tank is provided with a first through hole and a first water outlet hole, the drainage structure is arranged on the external wall of the cover plate and is located above the end plate. The end plate is provided with a second water outlet hole, the first water outlet hole corresponds to the second water outlet hole in a vertical direction, the first through hole corresponds to the first connecting hole in the vertical direction, and the connecting member is configured to be connected to the first connecting hole by sequentially penetrating through the second connecting hole and the first through hole.

Further, the drainage structure is adhered to the external wall of the cover plate through a double-sided adhesive tape or glue.

Further, the drainage structure is a plastic member.

Further, an upper opening of the first water outlet hole is a water inlet, a lower opening of the first water outlet hole is a water outlet, the water outlet is provided with protrusions around the water outlet.

Further, a left end of the drainage structure is provided with a left wrap angle edge structure matched with an upper left angle edge of the cover plate, and a right end of the drainage structure is provided with a right wrap angle edge structure matched with an upper right angle edge of the cover plate.

Further, the first connecting hole is arranged in an upper wall of the pole terminal, an upper opening of the first connecting hole is an upper orifice, the upper wall of the pole terminal is provided with a water flowing groove along the upper orifice and a first water guiding groove communicated with the water flowing groove.

Further, the upper wall of the pole terminal is provided with a water returning groove communicated with the water flowing groove and tilted upwardly towards the cover plate.

Further, an upper surface of an inner wall of the water returning groove is an inclined surface inclined towards a bottom wall of the water returning groove.

Further, a right wall of the pole terminal is provided with a first opening groove that is opened outwardly, an upper wall of the first opening groove is provided with a first rib, a right wall of the first rib is kept on a same level with the right wall of the pole terminal, and the first water guiding groove penetrates through the right wall.

Further, an inner wall of the pole terminal is provided with a plurality of water isolation grooves.

According to the above technical solutions, the present invention has the beneficial effects that: by arranging the drainage structure on the external wall of the cover plate, some water drops on the connecting member and the bus bar can flow into the water storage tank of the drainage structure, and water in the water storage tank can flow out of the battery module through the first water outlet hole and the second water outlet hole, thus solving a problem of dangerous phenomena such as electric leakage, short circuit, fire and explosion, and the like of the battery module caused by water drops condensed on a nut of a pole and the bus bar which may flow into the battery module.

### BRIEF DESCRIPTION OF THE DRAWINGS

FIG. 1 is a structure diagram of a battery module according to an embodiment of the present invention;
FIG. 2 is a decomposition diagram of the battery module according to an embodiment of the present invention;
FIG. 3 is a structure diagram of the battery module, viewed in another direction, according to an embodiment of the present invention;
FIG. 4 is a structure diagram of a drainage structure according to an embodiment of the present invention;
FIG. 5 is a structure diagram of a pole terminal according to an embodiment of the present invention; and
FIG. 6 is a structure diagram the pole terminal, viewed in another direction, according to an embodiment of the present invention.

### DETAILED DESCRIPTION OF THE EMBODIMENTS

To make the objectives, the technical solutions, and the advantages of the present invention clearer, the present invention is further described in detail hereinafter with reference to the accompanying drawings and the embodiments. It should be understood that the specific embodiments described herein are only used for explaining the present invention and are not intended to limit the present invention.

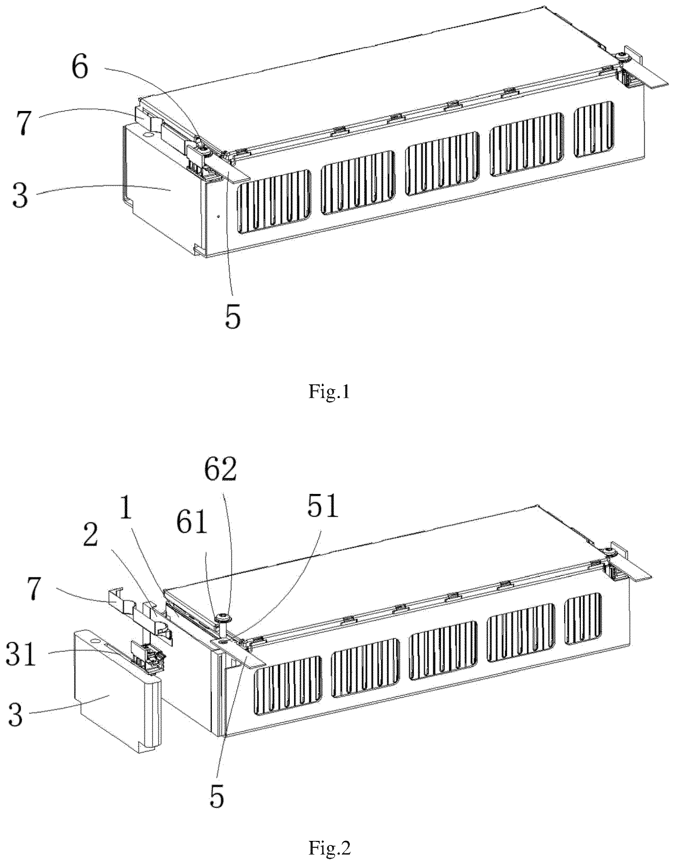

As shown in FIG. 1 to FIG. 4, according to an embodiment of the present invention, a battery module is proposed, which includes a cell 1, a cover plate 2, an end plate 3, a pole terminal 4, a bus bar 5, a connecting member 6 and a drainage structure 7.

The cell 1 is arranged on an inner wall of the cover plate 2, the end plate 3 is arranged on an external wall of the cover plate 2, and the pole terminal 4 is arranged on the end plate 3. The pole terminal 4 is provided with a first connecting hole, and the bus bar 5 is provided with a second connecting hole 51. The drainage structure 7 is provided with a water storage tank 71. The water storage tank 71 is provided at a bottom wall thereof with a first through hole 72 and a first water outlet hole 73, and the drainage structure 7 is arranged on the external wall of the cover plate 2 and is located above the end plate 3. The end plate 3 is provided with a second water outlet hole 31, the first water outlet hole 73 corresponds to the second water outlet hole 31 in a vertical direction, and the first through hole 72 corresponds to the first connecting hole in the vertical direction. The connecting member 6 sequentially penetrates through the second connecting hole 51 and the first through hole 72 to be connected to the first connecting hole.

By arranging the drainage structure 7 on the external wall of the cover plate 2, some water drops on the connecting member 6 and the bus bar 5 can flow into the water storage tank 71 of the drainage structure 7, then flow out of the battery module through the first water outlet hole 73 and the second water outlet hole 31 of the water storage tank 71, thus solving a problem of dangerous phenomena such as electric leakage, short circuit, fire and explosion, and the like of the battery module caused by water drops condensed on a nut of a pole and the bus bar which may flow into the battery module.

Both ends of the battery module are provided with the pole terminal 4, and the drainage structure 7 may be provided at either or both ends of the battery module. That is, the battery module includes a first end and a second end, either the first end or the second end includes the cell 1, the cover plate 2, the end plate 3, the pole terminal 4, the bus bar 5, the connecting member 6 and the drainage structure 7, or the first end and the second end both include the cell 1, the cover plate 2, the end plate 3, the pole terminal 4, the bus bar 5, the connecting member 6 and the drainage structure 7.

In the embodiment, the connecting member 6 is a screw 62 with a plastic gasket 61, and a nut is provided at an upper end of the screw 62. The water drops are mainly formed on the nut and the bus bar 5.

Since the drainage structure 7 is located below the connecting member 6 and the bus bar 5, the water drops formed on the connecting member 6 and bus bar 5 may fall into the drainage structure 7. Specifically, the water drops fall into the water storage tank 71 in the drainage structure 7, water in the water storage tank 71 may flow to the first water outlet hole 73, and the water in the water storage tank 71 flows out of the drainage structure 7 through the first water outlet hole 73. Since the first water outlet hole 73 corresponds to the second water outlet hole 31 in a vertical direction, the water flowing out through the first water outlet hole 73 may flow into the second water outlet hole 31, and then the water is discharged from the battery module through the second water outlet hole 31 to prevent the water from flowing into the battery module.

In order to facilitate flowing of the water in the water storage tank 71 to the first water outlet hole 73, the bottom wall of the water storage tank 71 is inclined towards the first water outlet hole 73.

In some embodiments, two first water outlet holes 73 are provided, and correspondingly, two second water outlet holes 31 are also provided. Each of the first water outlet holes 73 corresponds to a respective one of the second water outlet holes 31 in a vertical direction. Alternatively, the second water outlet hole 31 is a long hole, and the first water outlet hole 73 corresponds to the two second water outlet holes 31 in a vertical direction.

In the embodiment, the drainage structure 7 is manufactured using an extrusion molding technology.

In the embodiment, the drainage structure 7 is adhered to the external wall of the cover plate 2 through a double-sided adhesive tape or glue. The drainage structure 7 is located between the pole terminal 4 and the cover plate 2, so as to prevent the condensed water drops on the end plate 3 from having a capillary phenomenon due to a small interval between the inner wall of the pole terminal 4 and the cover plate 2, and prevent the condensed water drops on the end plate 3 from extending upwardly to the connecting member 6 or the bus bar 5, thus avoiding formation of a continuous waterway from the end plate 3 to the connecting member 6 or the bus bar 5.

In some embodiments, the drainage structure 7 and the cover plate 2 are integrally formed.

In the embodiment, the drainage structure 7 is a plastic member.

In the embodiment, an upper opening of the first water outlet hole 73 is a water inlet, and a lower opening of the first water outlet hole 73 is a water outlet. The water outlet is provided with protrusions 731 around the water outlet. The protrusions 731 have a function of an eave structure, which changes water flowing into water dripping, and prevents the formation of the continuous waterway towards the end plate 3.

In the embodiment, the drainage structure 7 is provided with a left wrap angle edge structure 74 at a left end thereof that is matched with an upper left angle edge of the cover plate 2, and a right wrap angle edge structure 75 at a right end thereof that is matched with an upper right angle edge of the cover plate 2, thus enabling a more firm fixing on the cover plate 2. Specifically, the left wrap angle edge structure 74 is adhered to the upper left angle edge of the cover plate 2 through the double-sided adhesive tape or glue, and the right wrap angle edge structure 75 is adhered to the upper right angle edge of the cover plate 2 through the double-sided adhesive tape or glue.

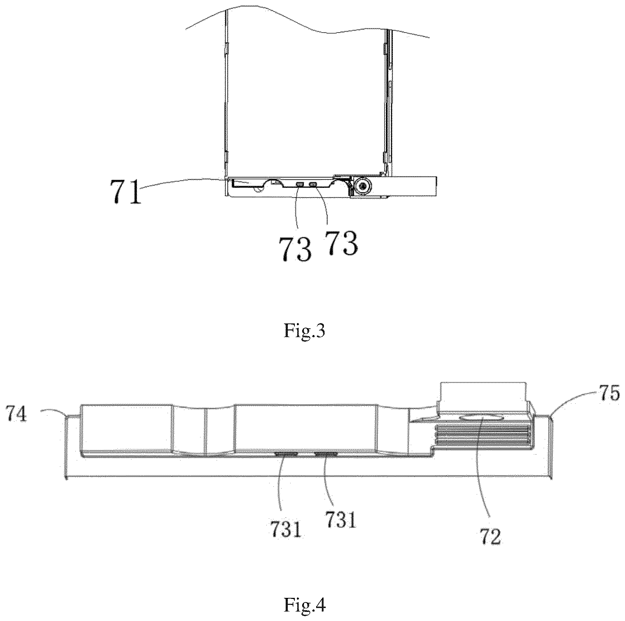

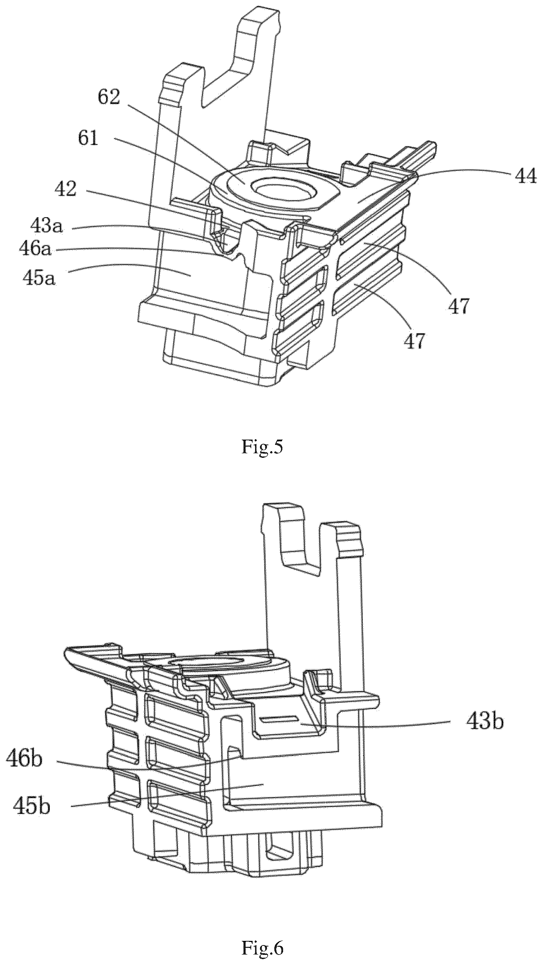

As shown in FIG. 5 and FIG. 4, in the embodiment, the first connecting hole is arranged in an upper wall of the pole terminal 4, and an upper opening of the first connecting hole is an upper orifice. The upper wall of the pole terminal 4 is provided with a water flowing groove 42 arranged along the upper orifice. The upper wall of the pole terminal 4 is provided with a first water guiding groove 43 a, and the first water guiding groove 43a is communicated with the water flowing groove 42. The water drops formed on the connecting member 6 may fall into the water flowing groove 42, the water flows to the first water guiding groove 43a through the water flowing groove 42, and the first water guiding groove 43a discharges the water out of the battery module.

In the embodiment, the upper wall of the pole terminal 4 is provided with a water returning groove 44 communicated with the water flowing groove 42, and the water returning groove 44 tilts upwardly towards the cover plate 2, thus preventing the water from flowing into the battery module, and avoiding condensed water from flowing into the battery module to be communicated with the cell 1.

In the embodiment, an upper surface of an inner wall of the water returning groove 44 is an inclined surface inclined towards a bottom wall of the water returning groove 44. The inclined surface structure makes the condensed water drops only be able to flow to the water flowing groove 42, thus preventing the water from flowing into the battery module, and avoiding the condensed water from flowing into the battery module to be communicated with the cell 1.

In the embodiment, a right wall of the pole terminal 4 is provided with a first opening groove 45a that is opened outwardly, an upper wall of the first opening groove 45a is provided with a first rib 46a, a right wall of the first rib 46a is kept on a same level with the right wall of the pole terminal 4, and the first water guiding groove 43a penetrates through the right wall. The first rib 46a has a function of an eave structure, which changes water flowing into water dripping, and prevents the formation of the continuous waterway. The water flows out from the first water guiding groove 43a, flows to the first rib 46a through the right wall of the pole terminal 4, drips into the first opening groove 45a from the first rib 46a, and then flows out through the first opening groove 45a.

In the embodiment, an inner wall of the pole terminal 4 is provided with multiple water isolation grooves 47, so as to prevent the condensed water drops on the end plate 3 from having a capillary phenomenon due to a small interval between the inner wall of the pole terminal 4 and the cover plate 2, and prevent the condensed water drops on the end plate 3 from extending upwardly to the connecting member 6 or the bus bar 5, thus avoiding the formation of the continuous waterway from the end plate 3 to the connecting member 6 or the bus bar 5.

In some embodiments, the upper wall of the pole terminal 4 is provided with a second water guiding groove 43b communicated with the water flowing groove 42. The water drops formed on the connecting member 6 may fall into the water flowing groove 42, the water flows to the second water guiding groove 43b through the water flowing groove 42, and the second water guiding groove 43b discharges the water out of the battery module.

In some embodiments, a left wall of the pole terminal 4 is provided with a second opening groove 45b that is opened outwardly, an upper wall of the second opening groove 45b is provided with a second rib 46b, a left wall of the second rib 46b is kept on a same level with the left wall of the pole terminal 4, and the second water guiding groove 43b penetrates through the left wall. The second rib 46b has a function of an eave structure, which changes water flowing into water dripping, and prevents the formation of the continuous waterway. The water flows out from the second water guiding groove 43b, flows to the second rib 46b through the left wall of the pole terminal 4, drips into the second opening groove 45b from the second rib 46b, and then flows out through the second opening groove 45b.

Those described above are merely preferred embodiments of the present invention, but are not intended to limit the present invention.

## Claims

1. A battery module, comprising a cell(1), a cover plate(2), an end plate(3), a pole terminal(4), a bus bar(5), a connecting member(6) and a drainage structure(7), wherein,
the cell(7) is arranged on an inner wall of the cover plate(2), the end plate(3) is arranged on an external wall of the cover plate(2), the pole terminal(4) is arranged on the end plate(3),
the pole terminal(4) is provided with a first connecting hole, the bus bar(5) is provided with a second connecting hole(51),
the drainage structure(7) is provided with a water storage tank(71), a bottom wall of the water storage tank(71) is provided with a first through hole(72) and a first water outlet hole(73), the drainage structure(7) is arranged on the external wall of the cover plate(2) and is located above the end plate(3),
the end plate(3) is provided with a second water outlet hole(31), the first water outlet hole(73) corresponds to the second water outlet hole(31) in a vertical direction, the first through hole(72) corresponds to the first connecting hole in the vertical direction, and the connecting member(6) is configured to be connected to the first connecting hole by sequentially penetrating through the second connecting hole(51) and the first through hole(72).

2. The battery module according to claim 1, wherein the drainage structure(7) is adhered to the external wall of the cover plate(2) through a double-sided adhesive tape or glue.

3. The battery module according to claim 1, wherein the drainage structure(7) is a plastic member.

4. The battery module according to claim 1, wherein an upper opening of the first water outlet hole(73) is a water inlet, a lower opening of the first water outlet hole(73) is a water outlet, the water outlet is provided with protrusions(73 1) around the water outlet.

5. The battery module according to claim 1, wherein a left end of the drainage structure(7) is provided with a left wrap angle edge structure(74) matched with an upper left angle edge of the cover plate(2), and a right end of the drainage structure(7) is provided with a right wrap angle edge structure(75) matched with an upper right angle edge of the cover plate(2).

6. The battery module according to claim 1, wherein the first connecting hole is arranged in an upper wall of the pole terminal(4), an upper opening of the first connecting hole is an upper orifice, the upper wall of the pole terminal(4) is provided with a water flowing groove(42) along the upper orifice and a first water guiding groove(43a) communicated with the water flowing groove(42).

7. The battery module according to claim 6, wherein the upper wall of the pole terminal(4) is provided with a water returning groove(44) communicated with the water flowing groove(42) and tilted upwardly towards the cover plate(2).

8. The battery module according to claim 7, wherein an upper surface of an inner wall of the water returning groove(44) is an inclined surface inclined towards a bottom wall of the water returning groove(44).

9. The battery module according to claim 6, wherein a right wall of the pole terminal(4) is provided with a first opening groove(45a) that is opened outwardly, an upper wall of the first opening groove(45a) is provided with a first rib(46a), a right wall of the first rib(46a) is kept on a same level with the right wall of the pole terminal(4), and the first water guiding groove(43a) penetrates through the right wall.

10. The battery module according to claim 6, wherein an inner wall of the pole terminal(4) is provided with a plurality of water isolation grooves(47).

## Patentansprüche

1. Batteriemodul, das eine Zelle (1), eine Abdeckplatte (2), eine Endplatte (3), eine Polklemme (4), eine Sammelschiene (5), ein Verbindungselement (6) und eine Drainage-Struktur (7) umfasst, wobei
die Zelle (7) an einer Innenwand der Abdeckplatte (2) angeordnet ist, die Endplatte (3) an einer Außenwand der Abdeckplatte (2) angeordnet ist, die Polklemme (4) an der Endplatte (3) angeordnet ist,
die Polklemme (4) mit einem ersten Verbindungsloch versehen ist, die Sammelschiene (5) mit einem zweiten Verbindungsloch (51) versehen ist,
die Drainage-Struktur (7) mit einem Wasserspeichertank (71) versehen ist, eine Bodenwand des Wasserspeichertanks (71) mit einem ersten Durchgangsloch (72) und einem ersten Wasserauslassloch (73) versehen ist, die Drainage-Struktur (7) an der Außenwand der Abdeckplatte (2) angeordnet ist und sich oberhalb der Endplatte (3) befindet,
die Endplatte (3) mit einem zweiten Wasserauslassloch (31) versehen ist, das erste Wasserauslassloch (73) in einer vertikalen Richtung dem zweiten Wasserauslassloch (31) entspricht, das erste Durchgangsloch (72) in der vertikalen Richtung dem ersten Verbindungsloch entspricht, und das Verbindungselement (6) konfiguriert ist, um durch aufeinanderfolgendes Durchdringen des zweiten Verbindungsloches (51) und des ersten Durchgangsloches (72) mit dem ersten Verbindungsloch verbunden zu werden.

2. Batteriemodul nach Anspruch 1, wobei die Drainage-Struktur (7) durch ein doppelseitiges Klebeband oder Kleber an der Außenwand der Abdeckplatte (2) festgemacht ist.

3. Batteriemodul nach Anspruch 1, wobei die Drainage-Struktur (7) ein Kunststoffelement ist.

4. Batteriemodul nach Anspruch 1, wobei eine obere Öffnung des ersten Wasserauslasslochs (73) ein Wassereinlass ist, eine untere Öffnung des ersten Wasserauslasslochs (73) ein Wasserauslass ist, der Wasserauslass rund um den Wasserauslass herum mit Vorsprüngen (731) versehen ist.

5. Batteriemodul nach Anspruch 1, wobei ein linkes Ende der Drainage-Struktur (7) mit einer linksgewickelten Winkelkantenstruktur (74) versehen ist, die zu einer oberen linken Winkelkante der Abdeckplatte (2) passt, und ein rechtes Ende der Drainage-Struktur (7) mit einer rechtsgewickelten Winkelkantenstruktur (75) versehen ist, die zu einer oberen rechten Winkelkante der Abdeckplatte (2) passt.

6. Batteriemodul nach Anspruch 1, wobei das erste Verbindungsloch in einer oberen Wand der Polklemme (4) angeordnet ist, eine obere Öffnung des ersten Verbindungslochs eine obere Mündung ist, die obere Wand der Polklemme (4) mit einer Wasserströmungsnut (42) entlang der oberen Mündung und einer ersten Wasserführungsnut (43a), die mit der Wasserströmungsnut (42) kommuniziert, versehen ist.

7. Batteriemodul nach Anspruch 6, wobei die obere Wand der Polklemme (4) mit einer Wasserrücklaufnut (44) versehen ist, die mit der Wasserströmungsnut (42) kommuniziert und nach oben zur Abdeckplatte (2) hin geneigt ist.

8. Batteriemodul nach Anspruch 7, wobei eine obere Fläche einer Innenwand der Wasserrücklaufnut (44) eine geneigte Fläche ist, die zu einer Bodenwand der Wasserrücklaufnut (44) hin geneigt ist.

9. Batteriemodul nach Anspruch 6, wobei eine rechte Wand der Polklemme (4) mit einer ersten Öffnungsnut (45a) versehen ist, die nach außen geöffnet ist, eine obere Wand der ersten Öffnungsnut (45a) mit einer ersten Rippe (46a) versehen ist, eine rechte Wand der ersten Rippe (46a) mit der rechten Wand der Polklemme (4) auf einer gleichen Stufe gehalten wird, und die erste Wasserführungsnut (43a) durch die rechte Wand dringt.

10. Batteriemodul nach Anspruch 6, wobei eine Innenwand der Polklemme (4) mit einer Vielzahl von Wasserisoliernuten (47) versehen ist.

## Revendications

1. Module de batterie, comprenant un élément (1), une plaque de recouvrement (2), une plaque d'extrémité (3), une borne polaire (4), une barre omnibus (5), un élément de connexion (6) et une structure d'évacuation (7), dans lequel,
l'élément (7) est disposé sur une paroi interne de la plaque de recouvrement (2), la plaque d'extrémité (3) est disposée sur une paroi externe de la plaque de recouvrement (2), la borne polaire (4) est disposée sur la plaque d'extrémité (3),
la borne polaire (4) est dotée d'un premier trou de connexion, la barre omnibus (5) est dotée d'un second trou de connexion (51),
la structure d'évacuation (7) est dotée d'un réservoir de stockage d'eau (71), une paroi de fond du réservoir de stockage d'eau (71) est dotée d'un premier trou traversant (72) et d'un premier trou de sortie d'eau (73), la structure d'évacuation (7) est disposée sur la paroi externe de la plaque de recouvrement (2) et est située au-dessus de la plaque d'extrémité (3),
la plaque d'extrémité (3) est dotée d'un second trou de sortie d'eau (31), le premier trou de sortie d'eau (73) correspond au second trou de sortie d'eau (31) dans une direction verticale, le premier trou traversant (72) correspond au premier trou de connexion dans la direction verticale, et l'élément de connexion (6) est configuré pour être connecté au premier trou de connexion en pénétrant séquentiellement à travers le second trou de connexion (51) et le premier trou traversant (72).

2. Module de batterie selon la revendication 1, dans lequel la structure d'évacuation (7) est collée à la paroi externe de la plaque de recouvrement (2) au moyen d'un ruban adhésif double face ou d'une colle.

3. Module de batterie selon la revendication 1, dans lequel la structure d'évacuation (7) est un élément en plastique.

4. Module de batterie selon la revendication 1, dans lequel une ouverture supérieure du premier trou de sortie d'eau (73) est une entrée d'eau, une ouverture inférieure du premier trou de sortie d'eau (73) est une sortie d'eau, la sortie d'eau est dotée de saillies (731) autour de la sortie d'eau.

5. Module de batterie selon la revendication 1, dans lequel une extrémité gauche de la structure d'évacuation (7) est dotée d'une structure de bord angulaire de contact gauche (74) adaptée à un bord angulaire gauche supérieur de la plaque de recouvrement (2), et une extrémité droite de la structure d'évacuation (7) est dotée d'une structure de bord angulaire de contact droit (75) adaptée à un bord angulaire droit supérieur de la plaque de recouvrement (2).

6. Module de batterie selon la revendication 1, dans lequel le premier trou de connexion est disposé dans une paroi supérieure de la borne polaire (4), une ouverture supérieure du premier trou de connexion est un orifice supérieur, la paroi supérieure de la borne polaire (4) est dotée d'une rainure d'écoulement d'eau (42) le long de l'orifice supérieur et d'une première rainure de guidage d'eau (43a) en communication avec la rainure d'écoulement d'eau (42).

7. Module de batterie selon la revendication 6, dans lequel la paroi supérieure de la borne polaire (4) est dotée d'une rainure de retour d'eau (44) en communication avec la rainure d'écoulement d'eau (42) et inclinée vers le haut vers la plaque de recouvrement (2).

8. Module de batterie selon la revendication 7, dans lequel une surface supérieure d'une paroi interne de la rainure de retour d'eau (44) est une surface inclinée, inclinée vers une paroi de fond de la rainure de retour d'eau (44).

9. Module de batterie selon la revendication 6, dans lequel une paroi droite de la borne polaire (4) est dotée d'une première rainure d'ouverture (45a) qui est ouverte vers l'extérieur, une paroi supérieure de la première rainure d'ouverture (45a) est dotée d'une première nervure (46a), une paroi droite de la première nervure (46a) est maintenue au même niveau que la paroi droite de la borne polaire (4), et la première rainure de guidage d'eau (43a) pénètre à travers la paroi droite.

10. Module de batterie selon la revendication 6, dans lequel une paroi interne de la borne polaire (4) est dotée d'une pluralité de rainures d'isolement d'eau (47).
